# EUROPEAN PATENT APPLICATION

(11) **EP 2 988 061 A1**
(43) Date of publication of application: **24.02.2016**
(21) Application number: 14785669.4
(22) Date of filing: 15.04.2014
(51) Int. Cl.: F21V 7/09

(54) **REVOLVING REFLECTOR WITH COMPLEX SURFACE MICRO-STRUCTURES**

(30) Priority: 19.04.2013 ES 201330576
(71) Applicant: García Rodríguez, Lucas, 28049 Madrid (ES)
(72) Inventor: García Rodríguez, Lucas, 28049 Madrid (ES)
(86) International application number: PCT/ES2014/070312
(87) International publication number: WO 2014/170520

(57) **Abstract**

The invention relates to an optical system for lighting applications, fundamentally formed by a light source and a reflector, essentially with axial symmetry, the inner face thereof containing a complex surface formed by a plurality of microstructures with the particularity of being arranged in a specific distribution, according to a concrete parameterisation, and with a particular division of the surface space (tessellated), which allows a suitable destruction of the image projected from the actual light source, and provides a uniform and well-defined pattern of the projected light. The reflector can have an edge-free inner surface at the join between adjacent micro-structures, such that it reduces the optical losses and the light dispersion. There can also be a local regulation of the form and orientation between adjacent micro-structures by means of deformation, translation and/or rotation, which allows better control of the projected light and enables light patterns without axial symmetry. The invention also relates to a novel method for the construction of the complex inner surface of the reflector, allowing the novel technical characteristics mentioned, such that it extends and improves some current limitations.

## Description

The invention relates to an optical system for lighting applications, fundamentally formed by a light source and a reflector (1), whose internal face (2) contains a complex surface, essentially with axial symmetry, formed by a multiplicity of micro-structures (3) with the particularity of being arranged in a specific distribution, according to a concrete parameterization, and with a particular division of the superficial space (tessellation) (6), which allows a suitable destruction of the image projected of the actual light source, and provides an uniform and well-defined pattern of the projected light. The reflector can have an edge-free inner surface (71) at the join between adjacent micro-structures, such that it reduces the optical losses and the light dispersion. There can also be a local regulation of the form and orientation between adjacent micro-structures by means of deformation, translation and/or rotation, which allow better control of the projected light and enables light patterns without axial symmetry. The invention also relates to a novel method for the construction of the complex inner surface of the reflector, allowing the novel technical characteristics mentioned, such that it extends and improves some current limitations.

### STATE OF THE ART:

A reflector (1) allows to direct the light produced by a light source in particular directions, in order to take advantage of the light generated efficiently and to give the luminous wished effect.

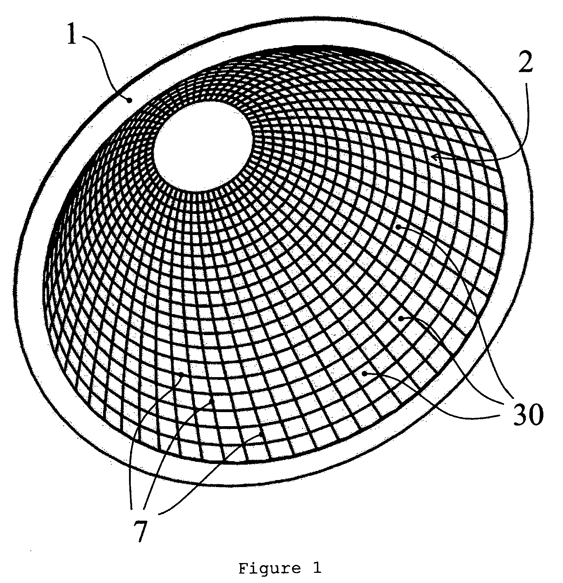

The projection of light from a reflector with its smooth inner surface generally presents troublesome shades corresponding to the image of the own light source. In order to eliminate this projected image of the source and get a light pattern uniform, a faceted surface (20) on the internal of the reflector is conferred. Normally, there uses a regular structure similar to the presented one in the Figure 1.

However, with the incorporation of facets (30) the system is capable of producing new unwanted shades in the projected light that are specific to this faceted structure. This is due to the existence of predominant directions and orientations on the inner surface of the reflector, related with such faceted structure. In particular, the existence of radial shades arises from a radial alignment of the structure of facets, while the ring shades are a motive of an axial symmetry of the own structures of facets.

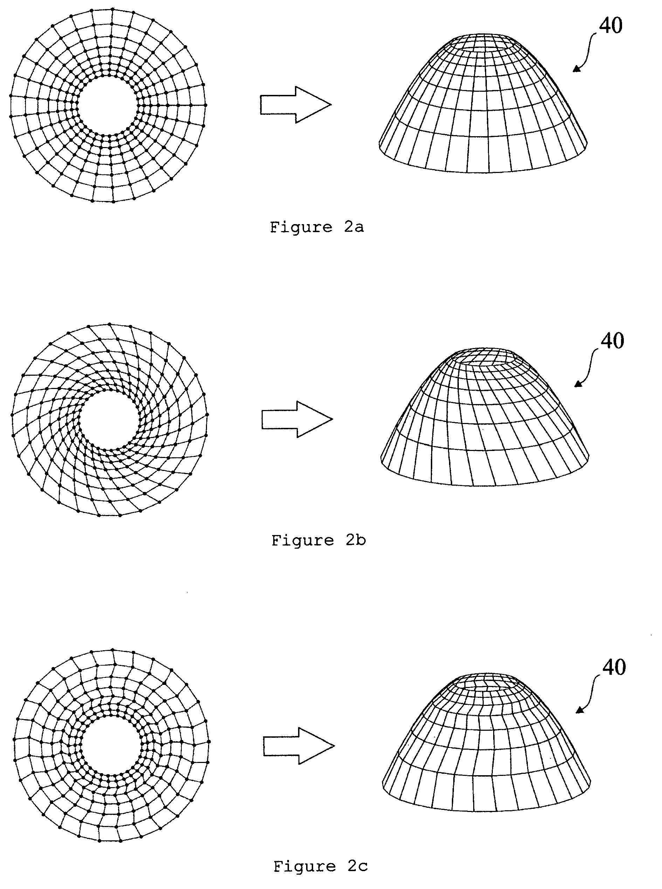

Therefore, a suitable spatial distribution of facets in the reflector surface may reduce such predominant directions and decrease the undesired shadows characteristics of the structure. For this reason, there were presented a number of existing distributions that avoid the above mentioned radial alignment, as the distribution of facets radially curve (Figure 2b), widely used, or a pseudo-random structure according to the Patent ES 2312260 A1 (Figure 2c).

The great majority of the methods used for the design of a reflector are based on operations of copy and rotation of surfaces with principal constant curvatures, generally planes or spheres, so that the internal faceted surface ensues from the intersection of this plurality of basic surfaces, which are arranged according to a regular distribution. These basic geometric operations are integrated into the current CAD tools, so the construction of a current reflector is relatively simple. Nevertheless, these present technical limitations, such as cause a distribution with axial symmetry, and therefore, capable to ring shadows due to the use of the above mentioned operations of rotation (Figure 2).

Also there have appeared other distributions that break, besides the radial correlation, the axial symmetry, as a superficially random distribution or that one based on the golden number according to patents WO 2010/112637 A1 and ES 2 346 395 B1, though these solutions are substantially more complex to implement.

The object of the present invention contemplates four new types of parameterizations that determine spatial distributions of the facets, or any other micro-structure (3) in the surface of the reflector, which avoid or diminishes alignments between micro-structures and superficial preferential orientations, which reduces the unwanted shades of the own structure. These are: the spiral distribution (Figure 3), the root distribution (Figure 4), the inverse root distribution (Figure 6) and the hyperbolic distribution (Figure 7), that they will be described hereinafter.

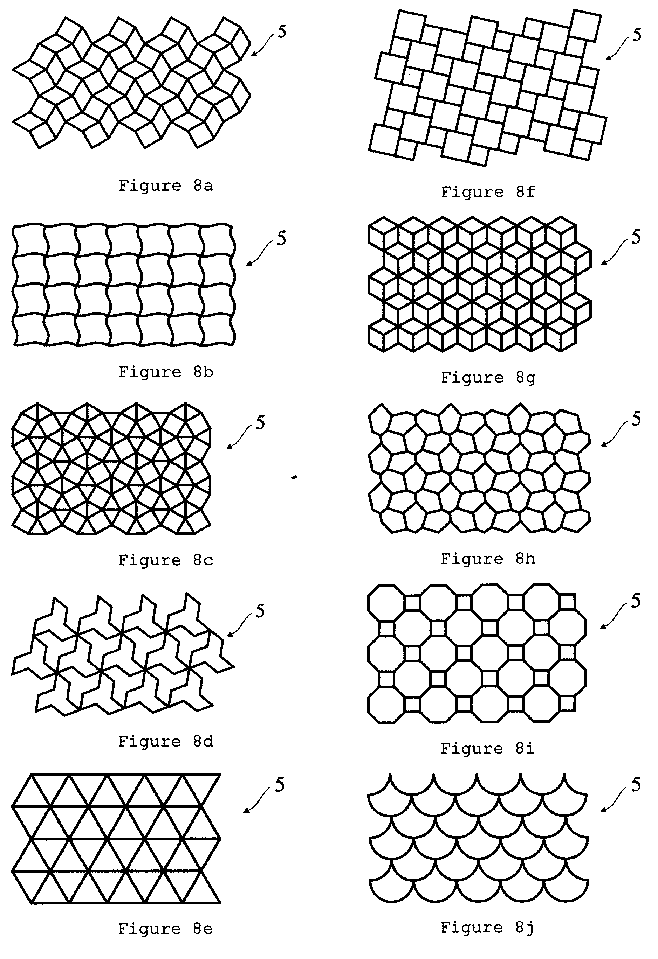

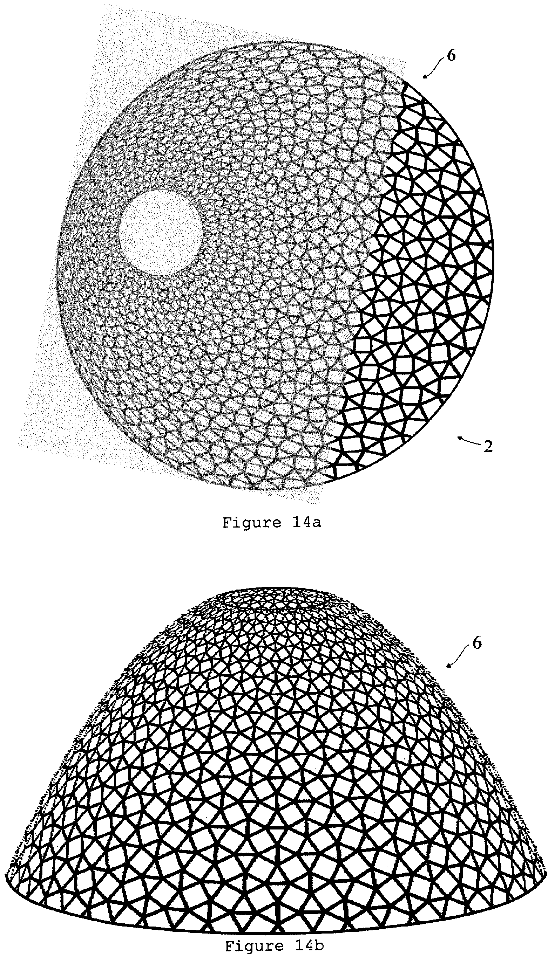

On the other hand, the tessellation, that is to say, the division, the fragmentation or superficial partition of the reflector associated with every micro-structure according to a mosaic that covers the whole surface of the reflector, has to be understood itself in a new order of things different from the concept of distribution and/or spatial parameterization of the above mentioned structures, previously mentioned. That is to say, a reflector can have micro-structures arranged according to the same spatial distribution, for example, in regulate form like the Figure 2a, but with different spatial division as it is observed in the Figures 8b and 8c. Specifically, the reflector corresponding to the Figure 1 and the correspondent to the Figure 14 has the same distribution and/or parameterization, but the tessellation is manifestly different.

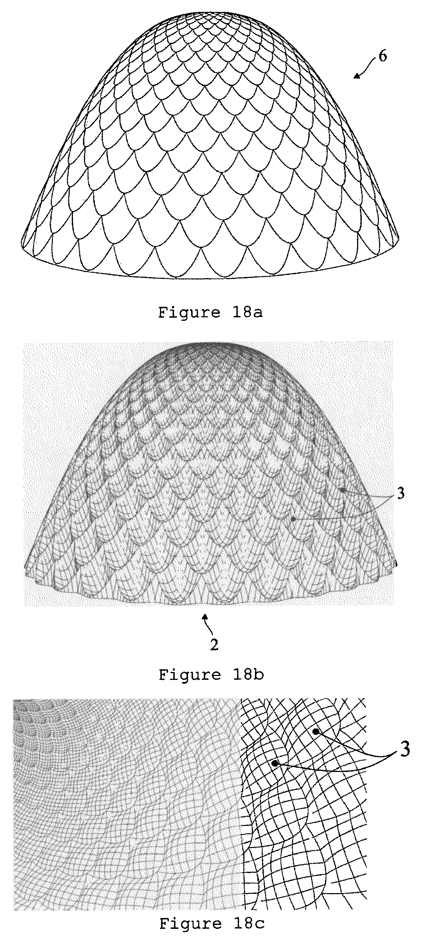

It turns out that the use of a certain tessellation influences the directions and preferential average orientations of the facets and, consistently, the generation of shades from the own structure, and the quality and definition of the projected light. In addition, on the other hand, the tessellation also influences in the control of the exposure of the light in regions capable of generating uncontrolled dispersion (81) and multiple reflections (80). For example, a suitable tessellation similar to the showed in the Figure 18a avoids that the light interacts with the edges of union between micro-structures and their proximities, and, consistently, it improves the light control, the definition of the luminous pattern and the efficiency of the optical system. The chose of the tessellation depends on the technical specifications. Therefore, the control of the tessellation is an extension of the control of the surface distribution of the micro-structures.

In spite of it, nevertheless, currently there is not evidence of the existence of any consideration or analysis on the control of the tessellated in the design of reflectors, due to the greater complexity that this carries, since it is required a substantial change in the methods of construction used. The present invention contemplates the control of the tessellation as a technical improvement in the condition of the technology.

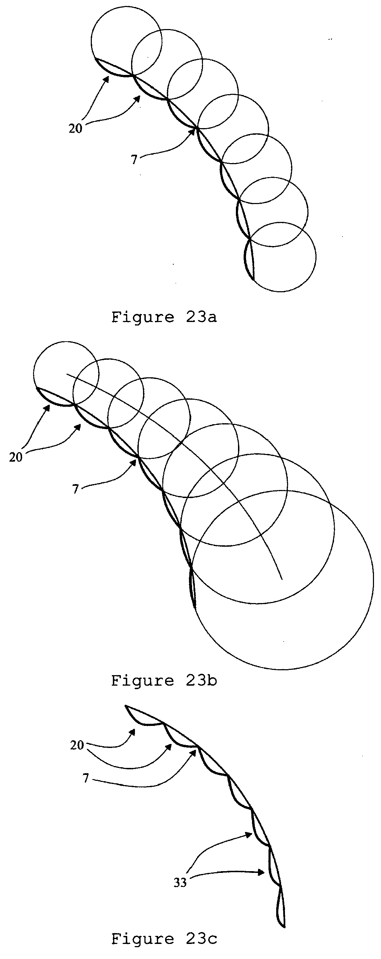

Nowadays, since the creation of a reflector departs from a plurality of basic surfaces so that they intersect some with others to compose the faceted structure (Figure 23a), a limitation exists in the resultant superficial partition, because with the existing design methods is not possible to control effectively the superficial fragmentation resultant of the above mentioned intersection. Generally, these current methods produce not uniform and not controllable superficial patterns due to its way of construction and merely geometric questions.

In the present invention reflectors with a control of the tessellation are covered, as well as a new method of construction of reflectors that allows define an arbitrary tessellation thanks to free form complex micro-structures. The method supposes a substantial change of the philosophy in the design of reflectors. Nowadays, it is based on a plurality of simple surfaces that intersect to form an uncontrolled faceted structure of the surface of the reflector. By contrast, the method proposed in the present invention is exactly the opposite: the reflectors are constructed from a specific superficial division (tessellation) and, later, the three-dimensional micro-structures are grown in each tile. This requires, except trivial exceptions where there is a high degree of symmetry, the use of micro-structures with complex surfaces that have variable principal curvatures (33). In other words, it is not possible an effective control of the tessellation with basic surfaces that have someone of his principal curvatures constant, which are the surfaces used nowadays, such as flat, spherical, cylindrical or revolved ellipsoidal surfaces, for example, due to purely geometric questions, as for such control is necessary the existence of more degrees of freedom, which are contributed by surfaces with variable curvatures. The invention is based on these complex surfaces with variable curvatures so that it extends several limitations existing currently.

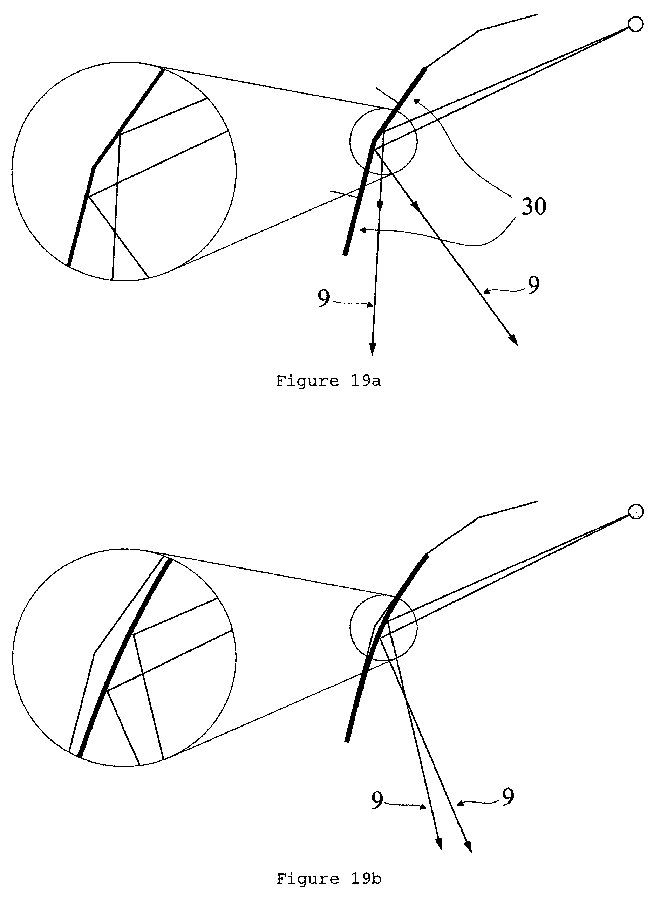

On the other hand, the existing technologies are based on faceted reflectors, that is to say, with facets, which are based and limit themselves, partly, in the viability in his own construction, which is linked to the tools current CAD. This leads, among other things, abrupt changes in the orientation (Figure 19a) of the neighboring facets of the reflector, which complicates the control of the light beam, being able to cause unwanted shades, unlike a reflector with soft changes of orientation (Figure 19b).

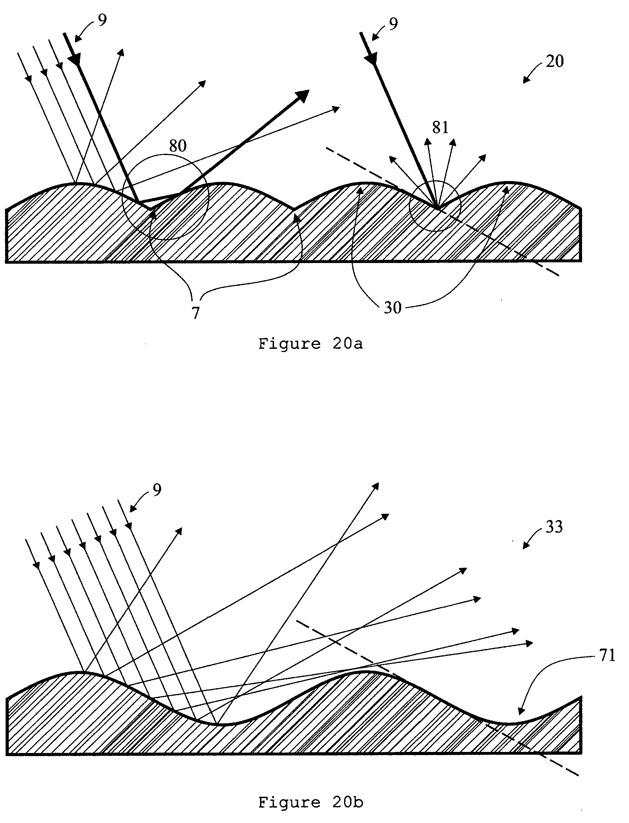

In addition, the current reflectors have edges (7) of union between facets (30) as a result of the intersection of their respective adjacent surfaces (Figure 20a). These edges reduce the luminous control, because the luminous rays (9) that interfere with these unions/edges are dispersed through uncontrolled directions (81). On the other hand, the rays that are reflected in points of the facets next to the vertex of intersection (left side of the Figure 20a), are capable of interact with adjacent facets causing, equally, uncontrol of the above mentioned rays and multiple reflections (80), which also implies light losses by reflection and, consequently, minor efficiency of the optical system.

Also, from the point of view of manufacture, the existence of the edges (7) of the current faceted reflectors is also a disadvantage, because it provokes a relatively rapid degradation of the tool manufacturing mold in the above mentioned edges, so much in the processes of spinning, stamping as those of injection. It causes higher costs for rectification or renovation of tools by degradation.

The most effective way of eliminating the problems arising from the existence of facets (30) and edges (7) is to eliminate the facets and edges. The present invention proposes a surface whose micro-structures bind to their adjacent micro-structures without abrupt changes in slope, that is, without union edges (71), as shown, without limitation, in the Figures, 19b, 20b, 21b, 21c, 22, 26 and 32.

Finally, due to the complexity of design and the existing limitations of the current CAD tools, the capabilities allowed by an advance design of a reflector with a local regulation of the shape and orientation of the micro-structures as an improvement in light control hardly have been explored.

Currently, in some cases, there is control of the scale and/or position of the facets of the reflector. This regulation is illustrated in Figure 23b. The surfaces that intersect to form facets are similar, identical except for a scale factor and a change of position and orientation. Generally, the control is based on the z-position of the facet respect to the axial axis of the system. In any particular case the reflector can be divided into two or more global regions and can use two or more basic surfaces. Facets with elementary surfaces are used, usually with their two main curvatures constants, such as spherical or cylindrical surface, where the scale factor is controlled by variation of the radio.

This control by merely scaling provides a poor definition of the directions of light and it is ineffective because there is really no regulation of the shape specifically for each micro-structure. Also, it causes a change in the division and density of the micro-structures in the reflector surface that complicates the design.

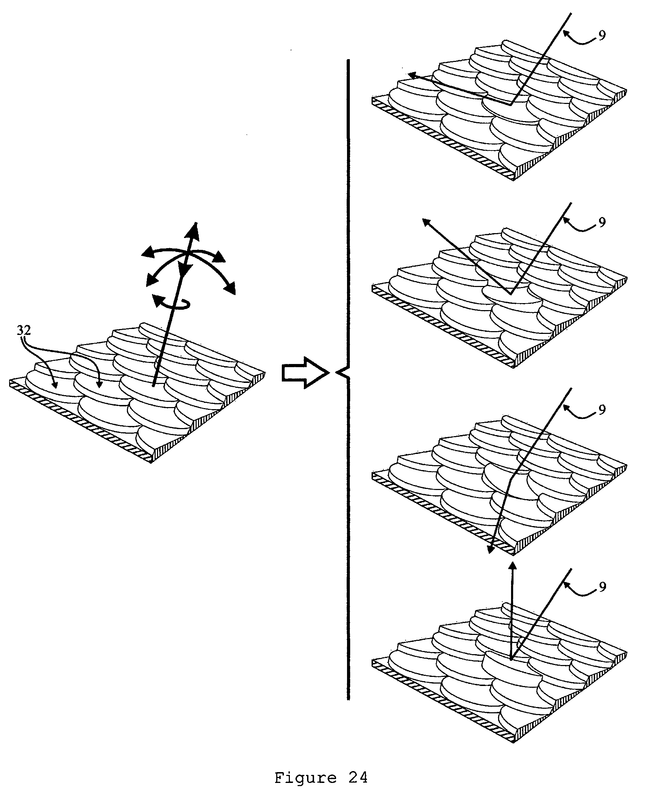

In the present invention, there are micro-structured reflectors that allow an adequate control of the light to provide non-axial patterns based on an individual regulation of the shape and orientation of each micro-structure by deformation, rotations and translations between neighboring micro-structures, for micro-structures with complex surfaces with at least one main curvature variable (Figure 23c), and for micro-structures with surfaces with at least one face exposed to the light essentially flat (Figure 24), in such a way that directs the light in a controlled manner.

The resulting manufacture of the reflectors of the invention can be made, without limiting characteristic, by existing industrialization processes as notching, injection mold, stamping or folding of one or more segmented flat sheets, and they can have or not, any central or side opening to locate properly the light source, under the specific characteristics of the system.

In summary, current reflectors are based on faceted surface that result from a plurality of elementary surfaces with constant curvatures, generally flat or spherical, that intersect each other. The methods to design and develop them are based on basic geometric operations of translation and rotation integrated into current CAD tools. This limits the possibilities of design of the optical system in terms of the distribution of the facets, tessellated of the surface of the reflector and local control of every facet. As a result, existing reflectors adopt trivial solutions with faceted, that present edges (uncontrolled light scattering and optical losses), with distributions with axial symmetry (radial shadows), and without a control of the partition of the surface (no tessellated especially) or effective local regulation of micro-structures, which would allow more control of light and light patterns more defined and more complex.

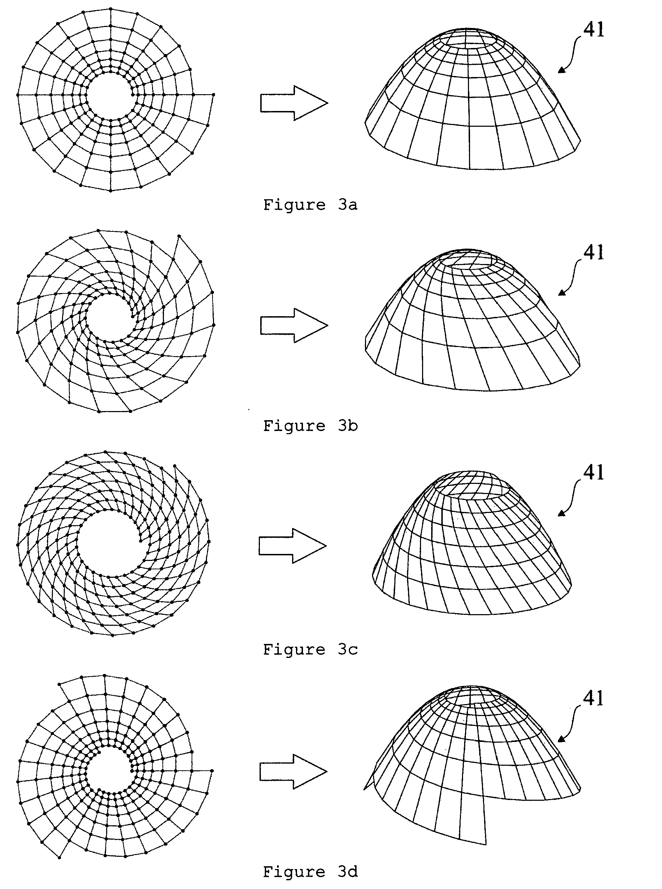

On the contrary, the present invention provides a more complex solution that provides nontrivial surface distributions of micro-structures (Figures 3, 4, 6, 7) that reduce the shadows of the structure of the reflector, with a special superficial partition (tessellation) (8, 9, 13, 14, 15, 16, 17, 18 and 31a), which smooths on average the transition of surface orientation between neighboring facets, and reduces the interaction of light with the edges and nearby, which improves the projected light pattern, with the possibility of an effective local regulation of micro-structure (Figure 23c and 24) and with the possibility of a structured surface free of edges between adjacent micro-structures (Figure 20b, 21b, 21c, 22, 26 and 32), which reduces the uncontrolled spread of light and optical losses.

A new method to build these complex reflectors is set, that enable more efficient optical systems, free of shadows and with higher control of the projected light.

### OBJECT OF THE INVENTION:-

The object of the present invention is an optical system for lighting applications primarily composed of a light source and a reflector (1), essentially with axial symmetry, whose internal face (2) contains a complex surface formed by a multiplicity of micro-structures (3) with the peculiarity of being arranged in a specific distribution, according to a specific parameterization and a particular division of the surface space (tessellation) (6), that allow an adequate destruction of the projected image of the source of light, and provides an uniform and well defined pattern of projected light. The reflector can have an internal surface free of edge (71) at the junction between adjacent microstructures, so that reduces optical losses and light scatter.

In addition, there may be a local regulation of the shape and orientation between adjacent micro-structures by deformation, translation and/or rotation, which allows higher control of the projected light and allows light patterns without axial symmetry. A new method for the construction of the complex internal surface of the reflector is described, which allows the novel technical features mentioned, so that extends and improves some current limitations.

### ADVANTAGES OF THE INVENTION:

Listed below are the advantages of the present invention, these merely enunciative and not limiting there of:
- Higher optical efficiency, as a result of the reduction of multiple reflections by the elimination of edges on the inner surface of the reflector, or by the reduction in the interaction of the light in the vicinity of the edges, this by means of a suitable tessellation, that is, through a distribution and partition of the proper surface that "hides" the edges to the light coming from the source luminous.
- Higher control light, thanks to the reduction of double reflections and reflections on edges, causing scattering of light, through a proper control of the tessellation and a local regulation of the shape, position and orientation of each micro-structure.
- Minor unwanted shadows in the light projected by the system that are typical of the micro-structures and the image of the light source, thanks to a proper control of the distribution of the micro-structures and the partition of micro-structured surface, which reduces preferential surface orientations.
- Less degradation of the tool or mold for manufacturing, as a result of the reduction or elimination of edges.

### DESCRIPTION OF DESIGNS:

For a better understanding of this specification, the figures that describe, without limitation, the object of the invention is attached.
- **Figure 1****.** A reflector (1) composed of a plurality of facets (30) placed according to a regular distribution corresponding to Figure 2a is shown. The reflector has edges (7), and radial and angular alignment of the facets which may cause radial and ring shadows in the projected light. The present invention improves these deficiencies.
- **Figure 2****.** Typical distributions of facets corresponding to existed reflectors are represented. They all have axial symmetry, which are capable of generating ring shadows in the projected light. The intersection of two lines determines a point that defines the position of each facet or micro-structure which comprises the reflector.
- **Figure 3****.** Distributions and/or spiral parameterizations (41) that define the location of the micro-structures comprising a reflector with a complex distribution, object of the invention, are shown. These distributions do not present axial symmetry, so they are less likely to produce ring shadows in the projected light than in typical distributions (Figure 2). The distributions corresponding to Figures 3a and 3d show a radial alignment of micro-structures while those on Figures 3b and 3c not, which also reduces the occurrence of radial shadows. The Figure 3d shows three adjacent coils, while the rest only presents a single spiral.

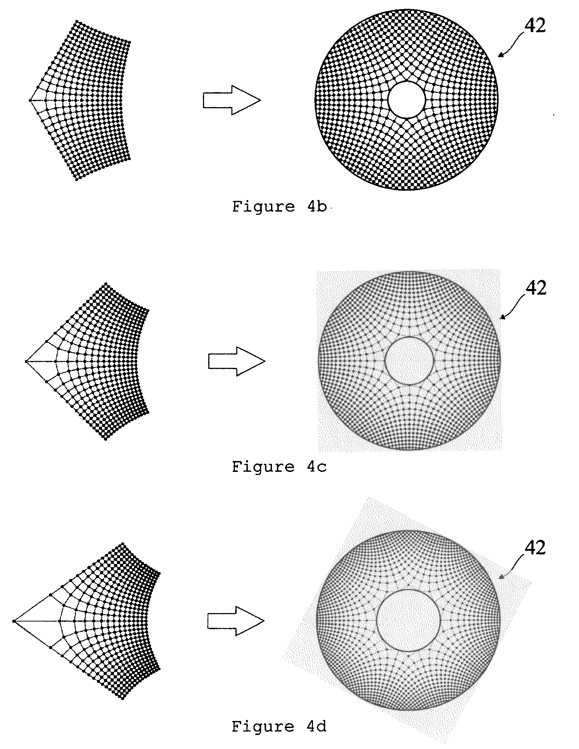

- **Figure 4****.** Some distributions and/or root parameterizations (42) are shown, according to expression *z* ^{*2*/}*^{k}.* These determine the position of the micro-structures that constitute a reflector for values of k equal to 3, 4 and 5.

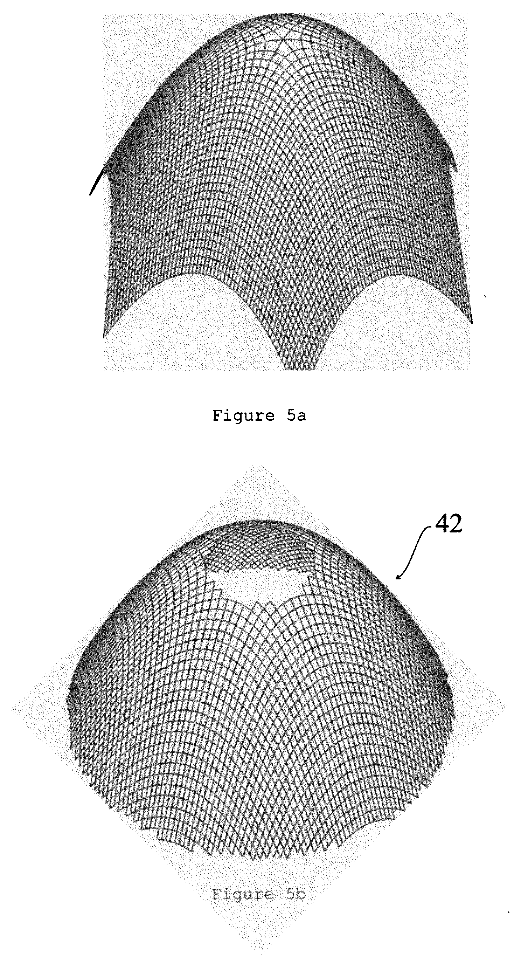

- **Figure 5**. The root parameterization of extended internal surface own of the reflector for *k = 3* (Figure 5a) is presented. The parameterization of the reflector surface is presented in Figure 5b.

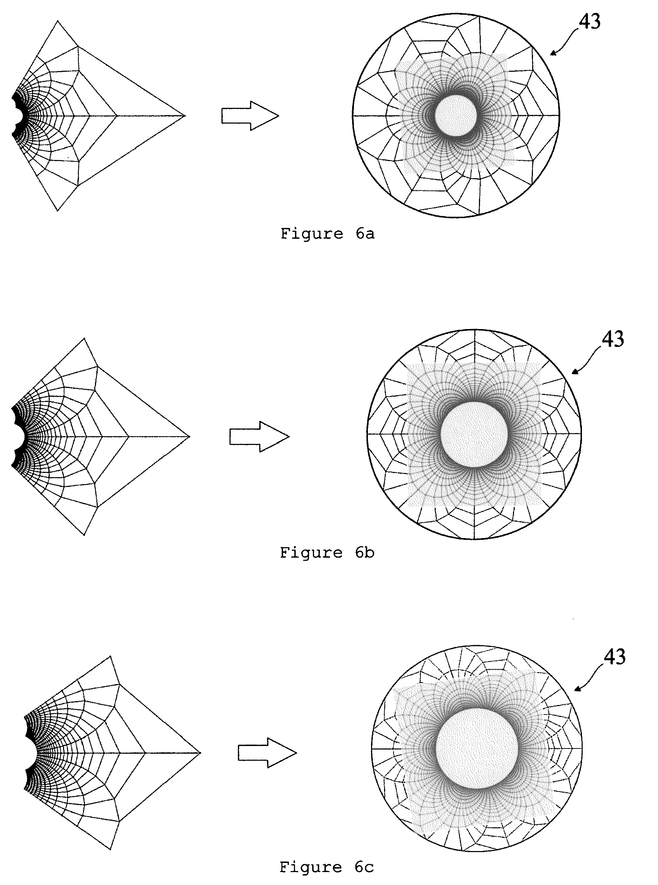

- **Figure 6****.** Several distributions and/or inverse root parameterizations (43), for values of k equal to 3, 4 and 5 are shown according to expression *z* ^{*-2*/*k*}. The intersection of each line represents the position of each microstructure which comprises the reflector surface.

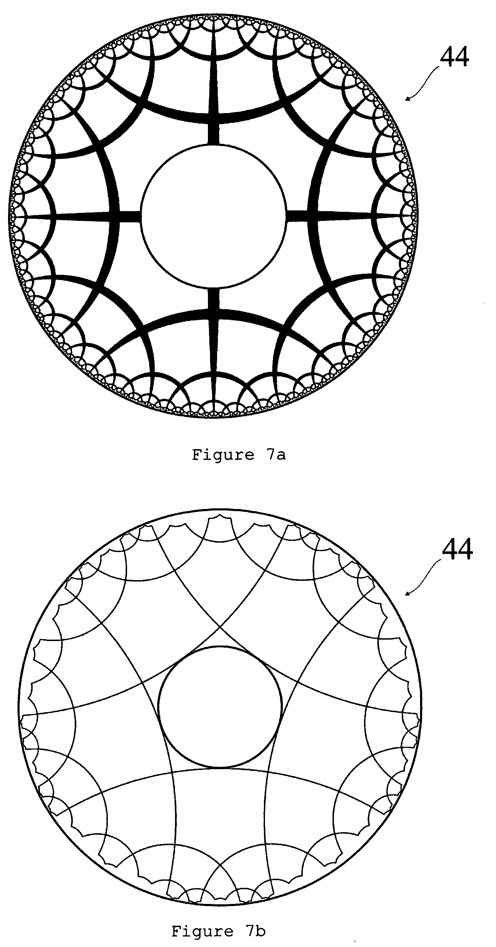

- **Figure 7****.** Two hyperbolic distributions and/or parameterizations are shown (44), which are characterized by having different numbers of micro-structure in different axial planes. The intersections of each line represent the positions of each micro-structure comprising the reflector surface.
- **Figure 8****.** Several regular mosaics (5) are represented in a plane. The distribution of the tiles in Figure 8b and 8c are identical, according a square distribution. There are tessellations composed by one type of tiles displaced, as in the case of Figure 8b or 8j, displaced and/or rotated, as in Figure 8d, 8e, 8g and 8h, or consisting of various types of tiles, as in Figure 8a, 8c, 8f or 8i.

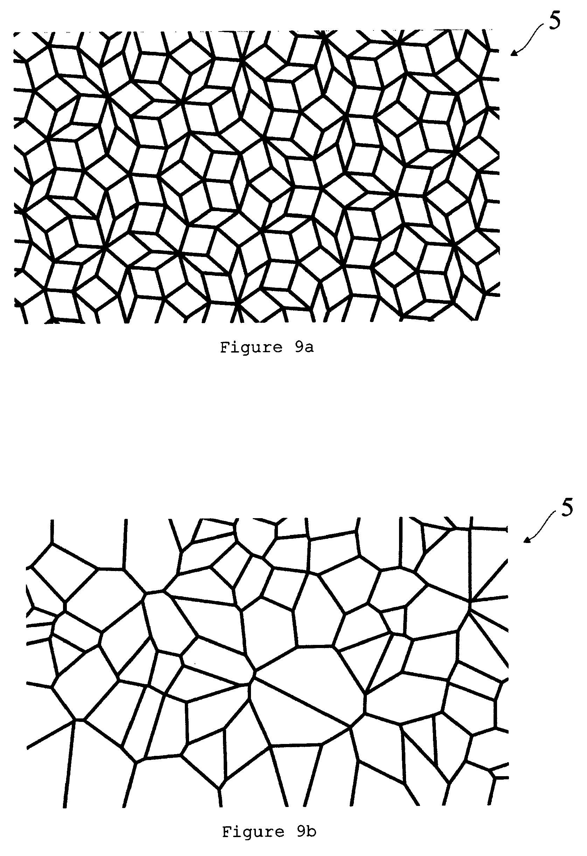

- **Figure 9****.** Two mosaics (5) non-periodic on the surface are shown in a plane. The first (Figure 9a) corresponds to a quasi-crystalline tessellation with pentagonal symmetry composed of two types of tiles, while the second (Figura9b) not.

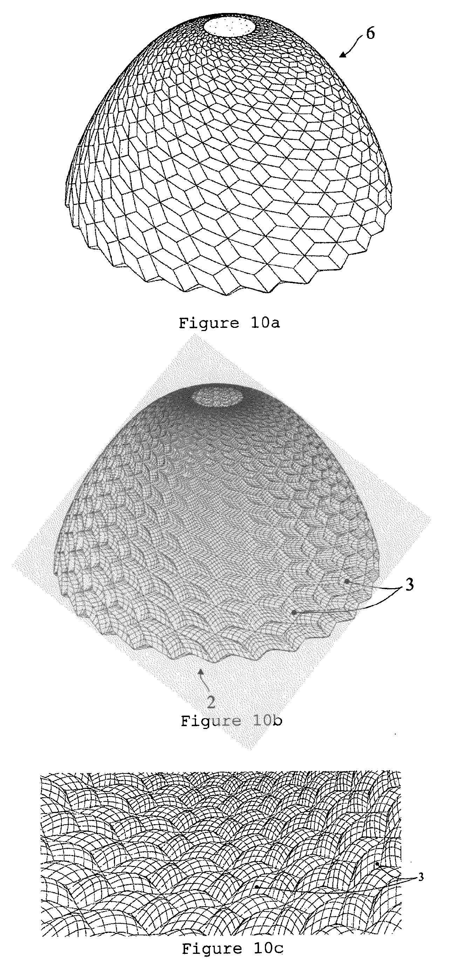

- **Figure 10****.** In Figure 10a a partition of the inner surface of the reflector (6) is shown according to the partition of the Figure 8g. In Figure 10b the resulting three-dimensional micro-structures of the complex surface appears. In Figure 10c a detail of these micro-structures is shown.

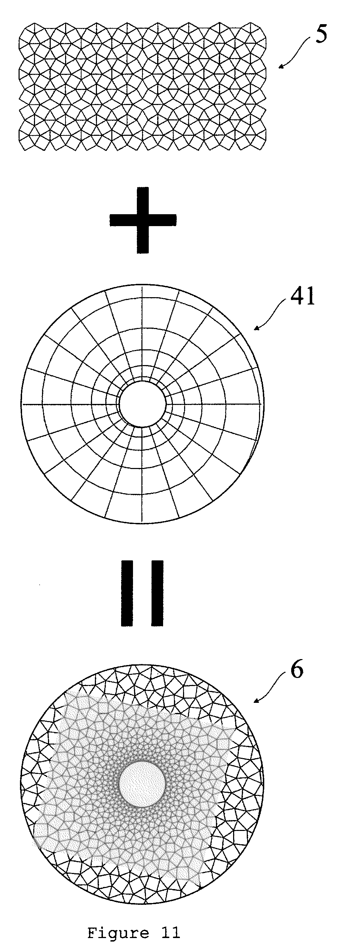

- **Figure 11****.** A diagram is shown. This illustrates the transformation that suffers the mosaic (5) corresponding to the Figure 8c defined in a flat plane according to the spiral parameterization (41) corresponding to Figure 3a, which distorts resulting a complex partition of the surface of the reflector (6).

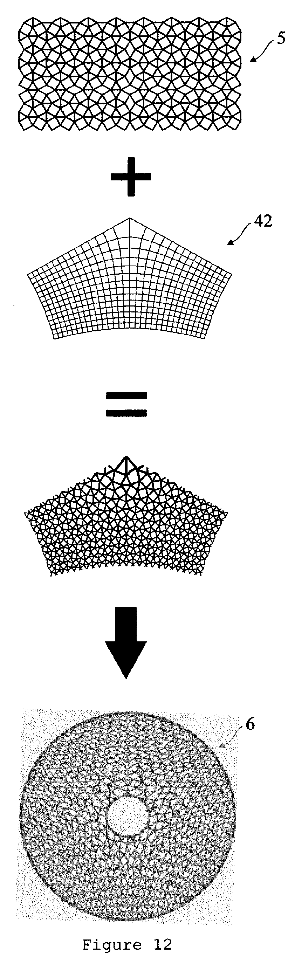

- **Figure 12****.** A diagram is represented. This detail the process of transformation of a regular mosaic (5) own Figure 8c defined over a flat plane according on the root parameterization (42) relative to the Figure 4b to form the tessellation (6) of the surface of the reflector. The process consists of a deformation through a conformal transformation, two operations of duplicate/rotation and a convenient cut to suit the geometry of the reflector.

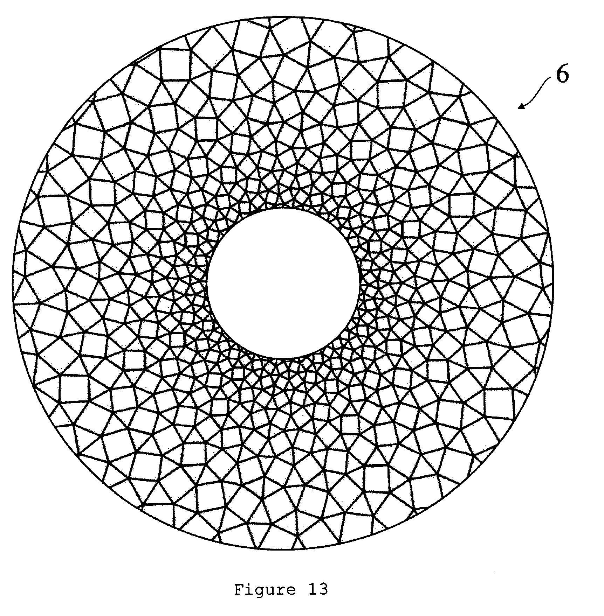

- **Figure 13****.** The transformation of the mosaic (5) corresponding to the Figure 8c represented in a flat plane according to the spiral parameterization (41) corresponding to Figure 3a is show.
- **Figure 14****.** A complex tessellation (6) is represented on the reflector surface that result from a transformation of the regular mosaic (5) of a plane corresponding to Figure 8c according to the standard parameterization (40) shown in Figure 2a.

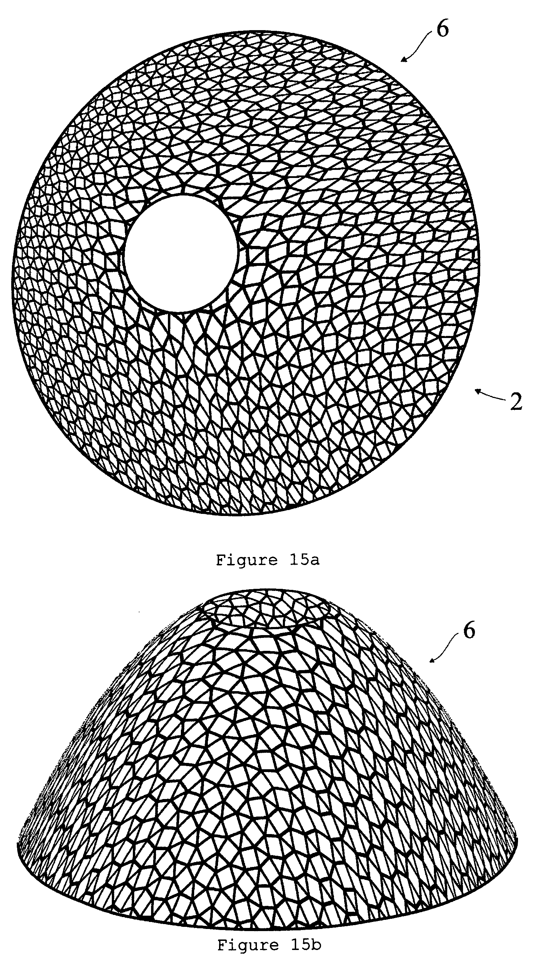

- **Figure 15****.** A complex tessellation (6) on the reflector surface is shown. This result from a transformation of the regular fragmentation (5) of a plane corresponding to Figure 8c according to the root parameterization (42) shown in Figure 4b.

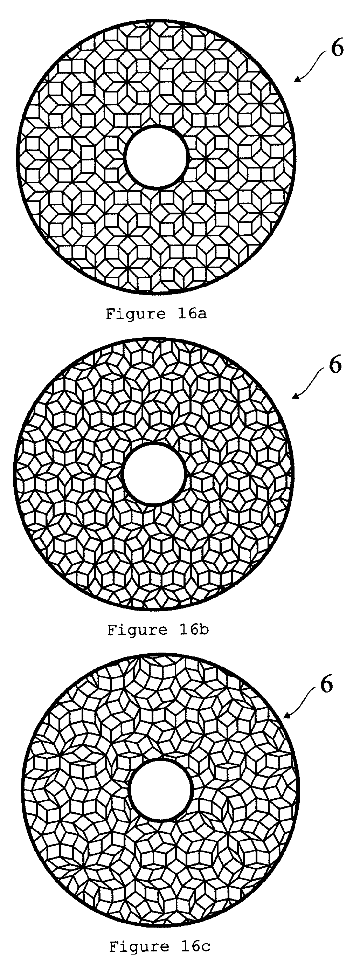

- **Figure 16****.** Different not regular partitions (6) of the surface of the reflector corresponding to aperiodic tiles are illustrated.

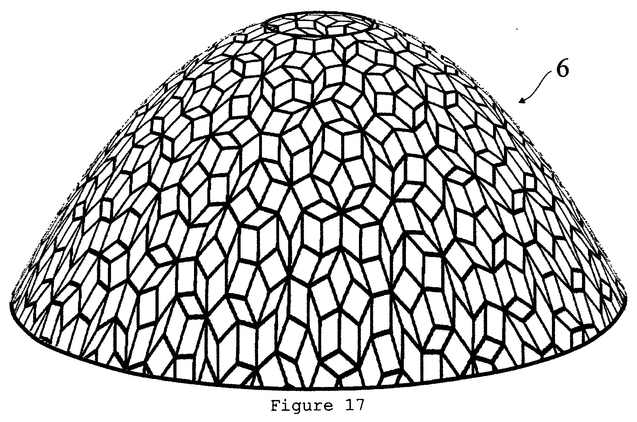

- **Figure 17****.** A complex tessellation (6) on the reflector surface based on a transformation as a not periodic mosaic (5) of a quasi-crystal with pentagonal symmetry in a plane is shown.
- **Figure 18****.** A surface tessellation of the reflector is shown in the form of flakes (Figure 18a). In Figure 18b the resulting surface formed by complex surfaces with varying curvatures is shown. In Figure 18c a detail of the micro-structures (3) is illustrated.
- **Figure 19****.** The influence of scattering rays (9) is illustrated due to an abrupt change of orientation between neighbors facets, own of the faceted structures (Figure 19a) compared to a smooth change (Figure 19b) that reduces the occurrence of unwanted shadows.
- **Figure 20****.** The effect of the interaction of the light rays (9) is shown in vicinity of the junction of two facets (30), which corresponds to Figure 20a, against a structure without facets and without joining edges (71), as shown in Figure 20b. A micro-structure with edges (7) is capable of presenting multiple reflections (80) by the reflection of rays near to edges between facets and uncontrolled dispersion (81) of the light corresponding to the reflection of light on the own edge.

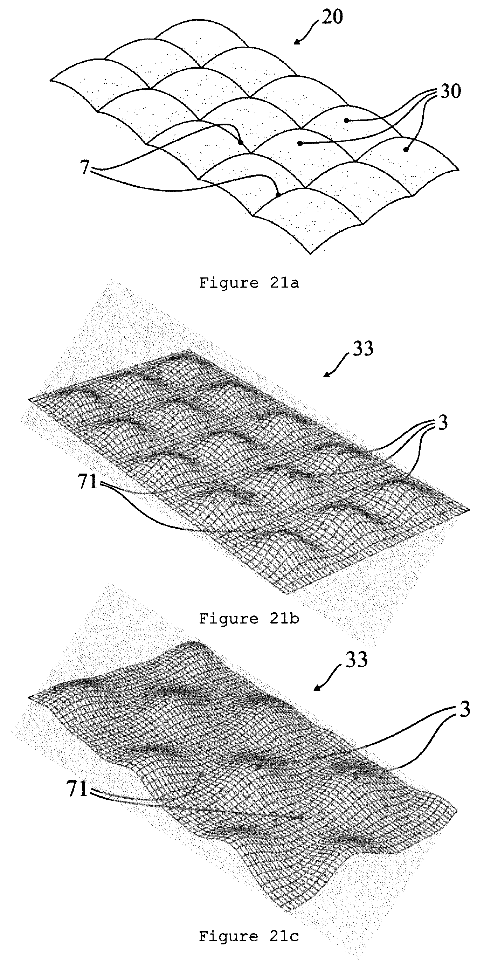

- **Figure 21****.** Different types of surface micro-structures are shown. In Figure 21a the standard solution consisting of the intersection of spherical surfaces is presented, that produces binding edges (7). Figures 21a and 21c are composed of micro-structures whose junctions with their microstructures adjacent are soft (71), free of edges.

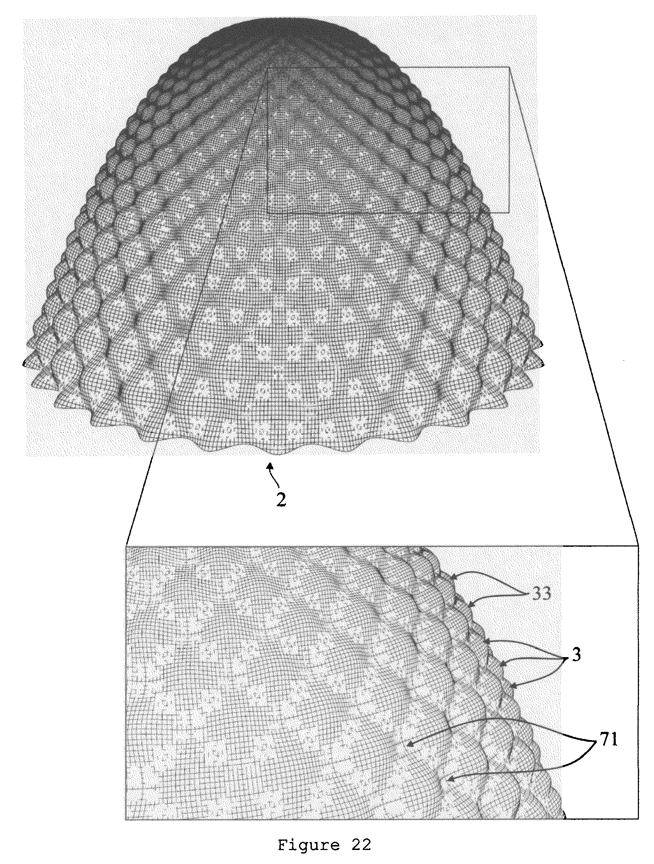

- **Figure 22****.** A detail of a possible surface of a reflector with soft (71) microstructures (3), without edges, is shown. The height of the micro-structures is intentionally magnified and this is observed on the outside in order to make clearer the visual understanding of the figure.
- **Figure 23****.** In Figure 23c a local regulation of the micro-structures by deformation is illustrated schematically as subject of the invention. This is implemented by slight changes in form between adjacent facets with varying curvature (33), in contrast with Figure 23a, in which there are no deformations between facets or with Figure 23b, that presents a regulation currently used where there is no change of the shape of the surface constituting of the facet, which substantially limits any effective local regulations of the light.
- **Figure 24****.** A local regulation of each micro-structure for no axial lighting patterns is represented. In particular, by way of illustration, a structure is presented in flakes with a flat face (32) wherein each flake can rotate, move and tilt without altering the tessellation for directing light in the desired direction, according to design specifications.

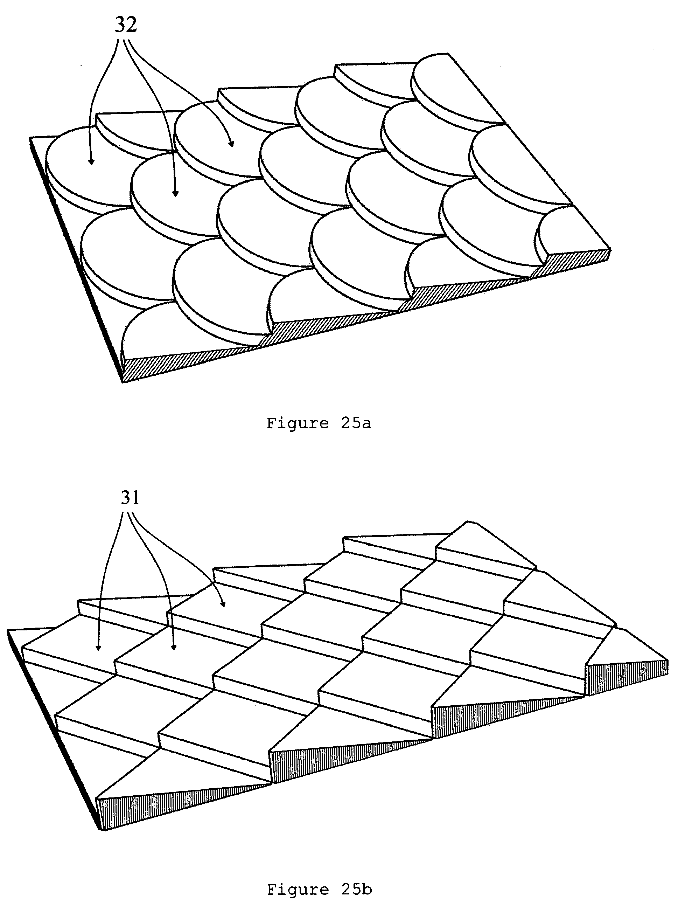

- **Figure 25****.** Different complex surface structures are represented with a flat face that enables local regulation of reflected light by reflection according to the subject invention.

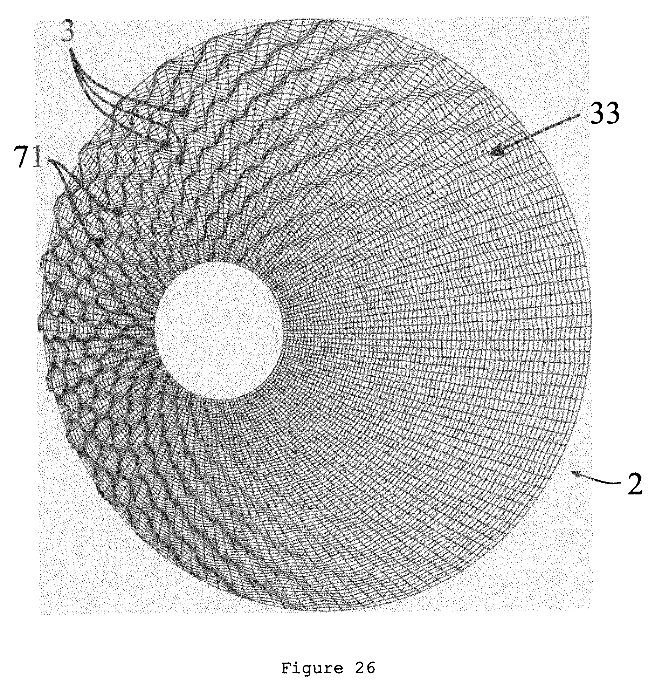

- **Figure 26****.** An inner surface with a soft local regulation of the shape of the micro-structures whose surface has a variable curvature (33) free of edges of union (71) is presented. The micro-structures of the right adopt different configurations respect to micro-structures of the left side.

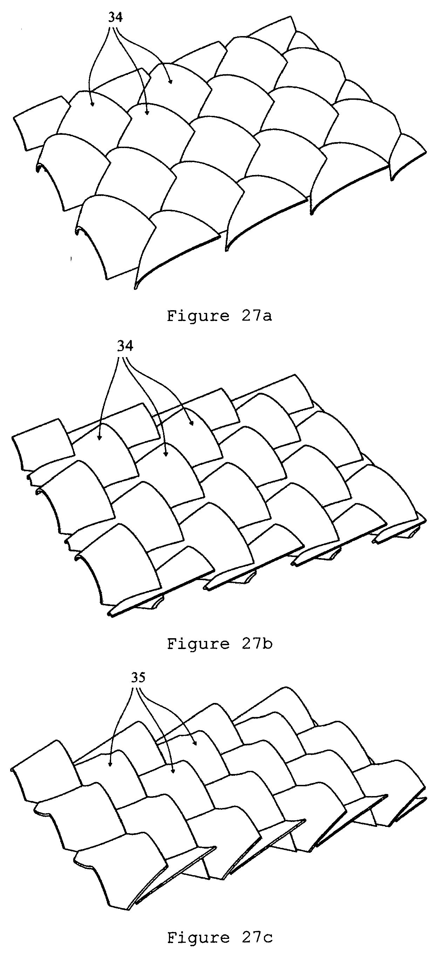

- **Figure 27****.** Different structures corresponding to surfaces of cones (34) or ruled surfaces (35) are represented. In Figure 27a the surface is composed of cones with circular base, whereas in Figure 27b are cones with elliptical base.

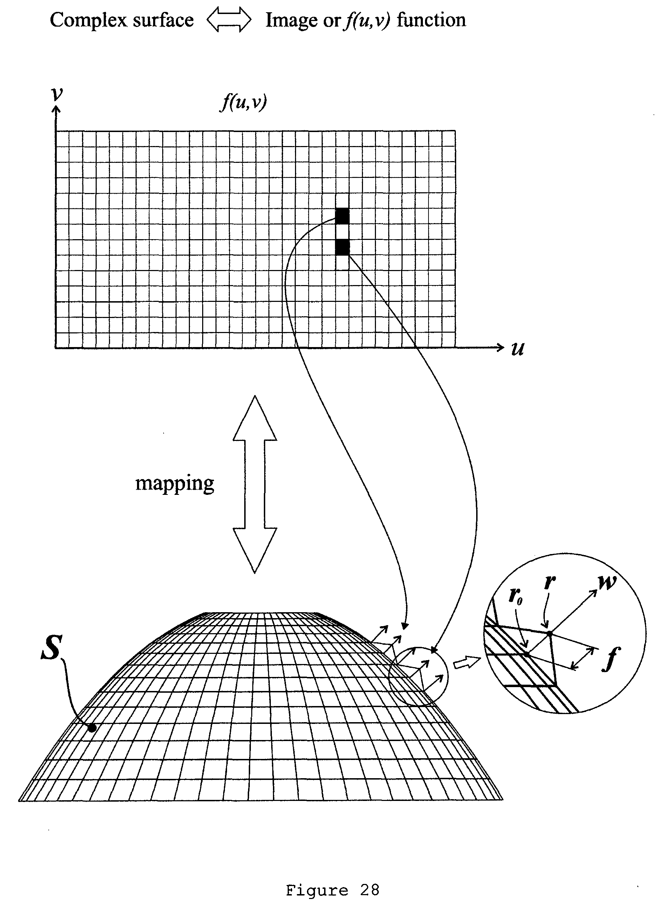

- **Figure 28****.** The procedure for the design and development of complex surfaces characteristic of the invention is described. This one consists of defining the micro-structured surface according to a growth from the points *rₒ* (*u*, *v*) of the surface ***S*,** with a concrete parameterization *(u, v),* along the vectors ***w** (u, v*) a distance *f (u, v*). This particular case, and without limitative character, contemplates an own regular parameterization of the Figure 2a.

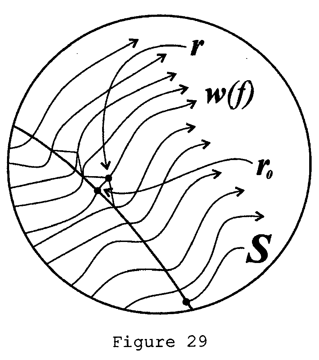

- **Figures 29****.** A detail relative to the procedure for the construction of complex surfaces of the reflectors ***S**** defined by the points *r (u, v*), that grows from the point *rₒ (u, v*) of the surface ***S*** along the field lines **w** *(f)* a distance *f* = *f (u, v)* is illustrated.

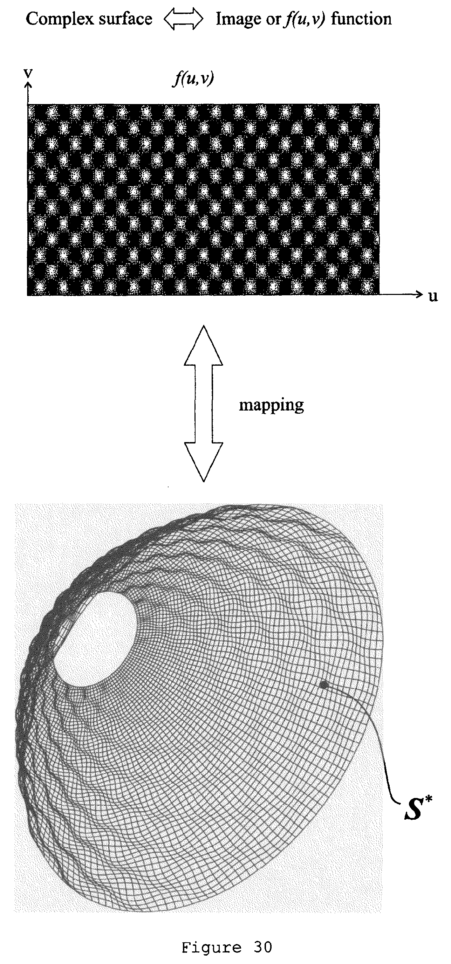

- **Figure 30****.** With an illustrative example, the method of construction of complex surface object of the present invention is shown, by which the complex surface of the reflector ***S**** on base to a function *f (u, v*) is defined.

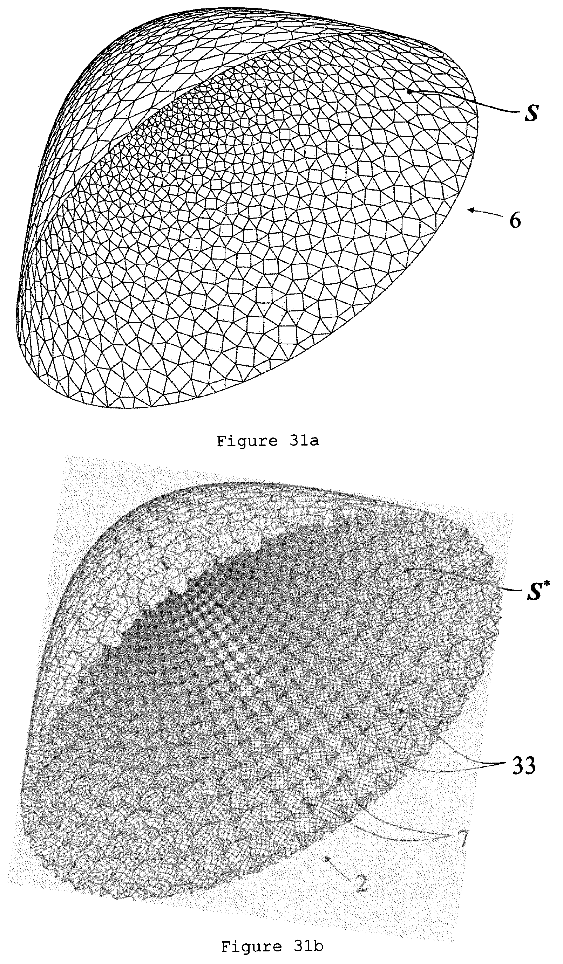

- **Figure 31****.** In the Figure 31a the transformation of the mosaic (5) corresponding to the Figure 8c on the inner surface of the reflector ***S*** is presented. In the Figure 31b there appears the three-dimensional complex surface ***S**** of a reflector whose micro-structures (3) are facets (30) that are located according to this tesellation. The facets have a three-dimensional complex form with variable curvature (33) that are necessary for adapting to such particular tesellation (6), which is not possible to be obtained by the basic surfaces generally used, as planes or spheres.

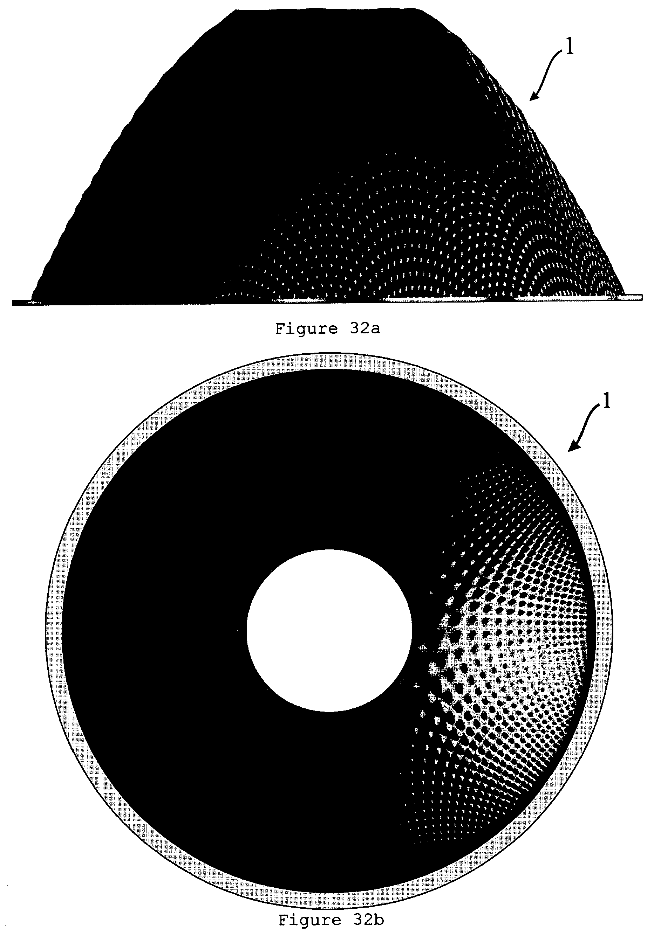

- **Figures 32****.** A reflector with a root distribution (42) is represented, according to the Figure 4d, and with a surface without edges of union (71) between micro-structures.

### DESCRIPTION OF THE INVENTION:

The present invention is based on conferring several novel and nonobvious features to existing solutions concerning to optical systems composed of a light source and a reflector (1) substantially of revolution comprising a plurality of micro-structures (3) for lighting applications. These features are mainly i) locate the micro-structures according new distributions and/or surface parameterizations avoiding preferential orientations, that reduce the occurrence of unwanted shadows, ii) confer a particular tessellated (6), that is, a specific partition of the inner surface of the reflector and build micro-structures according to this division, that allow smooth the transition in the directions of neighboring micro-structures and reduce dispersion and losses due to the interaction of light with the edges, allowing a more uniform and defined luminous pattern, iii) implement reflectors with micro-structures whose surface is free of edges (71) between micro-structures, eliminating problems of multiple reflections and unwanted luminous scattering, and iv) perform a local regulation of the shape and orientation of the micro-structures so as to provide patterns without axial symmetry. Also it is described a novel method for the design and construction of optical systems based on complex surfaces with these new features, and it extend the design limitations of the currently used methods.

### 1. PARAMETRIZATION REFLECTOR SURFACE AREA.-

To reduce the shadows generated by the structure of the inner surface of the reflector, the present invention provides four new types of parameterizations of the reflector surface that distribute the micro-structures of a particular form. These are: spiral distribution (41) described of Figure 3, root distribution (42) relative to Figure 4, inverse root distribution (43) according to Figure 6 and hyperbolic distribution (44) illustrated in Figure 7.

For simplicity and clarity of presentation, in some cases the distributions are presented in a plane. The real distribution of the curved surface of the reflector is set by matching with the distribution defined in the plane: for each point in the plane, represented in polar coordinates (r, ϕ), corresponds a point of the reflector surface given by (ρ = f (r), ϕ, z (r)), represented by cylindrical coordinates, where f (r) can be any monotonic function.

In Figures 2, 3, 4, 5, 6 and 7 the lines represent their corresponding parameterization system, being the points of intersection between lines those where the micro-structures are positioned. The following describes each of the proposed distributions.

### 1.1. Spiral distribution.

This distribution prevents an axial symmetry of the micro-structures with reducing the appearance of annular shadows. The micro-structures are distributed according to one or more coils according to Figures 3 to be mapped in the proper surface of the reflector in the manner described above.

In the simplest distribution, corresponding to Figure 3a, as well as in distribution illustrated in Figure 3d, there is a radial alignment between micro-structures. However, this type of distribution and/or configuration allows to avoid both the angular alignment and the radial alignment, as it is illustrated without limitation in Figures 3b and 3c, in such a way that minimizes the appearance of shadows of the proper surface of the reflector

In the right of Figures 3 the distributions in the extended surfaces of the reflector are shown. Through a cutting operation, the regions that are outside the actual surface of the reflector are discarded.

### 1.2. Root distribution.

It is a distribution that maps the complex plane according the transformation z → z 2 / k, k being an integer number greater than zero. It reduces unwanted shadows due to a reduction of preferred orientations. In Figure 4 several distributions for k = 3, 4 and 5 are shown.

Since the angular domain associated with the azimuth angle ϕ, corresponding to polar coordinates, is decremented under the transformation described above, it is necessary to duplicate and rotated the resulting space k-1 times. For example, if k = 3 (Figure 4a), the resultant space is set twice, the first has to be rotated 1 * 2n / k relation to the axis and the second 2 * 2n / k.

In Figure 5a root parameterization for k = 3 on an extended surface of the reflector is presented. Subsequently, by a cutting operation, the regions that lie outside the actual surface of the reflector are desestimated as shown in Figure 5b, or rejecting, as reflected in the representations to the right of Figure 4, where the resulting distributions are contained in a disc.

### 1.3. Reverse root distribution.

It is a distribution that maps the complex plane according to the transformation *z* → *z* ^{-*2*/}*^{k}, k* being an integer number greater than zero, which reduces radial and annular alignments substantially, and therefore reduces the occurrence of shadows of the structure of the surface of the reflector. In Figure 6 several distributions for *k* = 3, 4 and 5 are shown.

This type of distribution is analogous to the root distribution, so it is also necessary to perform copy/rotation/cutting operations for obtaining the resulting distributions presented to the right of Figure 6, which are contained in a disc.

### 1.4. Hyperbolic Distribution.

The hyperbolic distribution is based on a representation of the hyperbolic space in a circle according to the known model of disk Poincaré. This is illustrated in Figure 7 without limitation, where the lines are circles and intersect each other perpendicularly. Each annular region has a number of micro-structures such that the larger the ring more micro-structures are. Subsequently, this flat distribution is mapped on the curved surface of the reflector as described above is mapped. Quizás quisiste decir: Puesto que el dominio angular asociado con el ángulo azimutal ϕ correspondiente a las coordenadas polares se decrementa bajo la transformación descrita anteriormente, es preciso duplicar y rotar el espacio resultante k-1 veces. Por ejemplo, si k = 3 (figura 4a), el espacio resultante ha de duplicarse dos veces, el primero ha de rotarse 1*2n/k respecto al eje axial y el 25 segundo 2*2π/k.

### 2. SUPERFICIAL DIVISION (tessellation).

As explained in the prior art, a distribution and/or specific parameterization allows multiple types of surface partitions (6), which significantly influence in average transition of directions between neighboring micro-structures and in the exposure of light to regions of reflector capable to cause multiple reflections (80) and uncontrolled dispersion (81). Consequently, the tessellation affects the quality, efficiency and definition of projected light pattern.

There is no evidence of any strategies to benefit of tessellated control in the design of the current reflectors, according to the desired lighting specifications, which improve lighting control and system efficiency.

The methods currently used for the construction of reflectors are based on the intersection of a plurality of elementary surfaces, as illustrated in Figures 23a and 23b, and it does not allow a control of the surface partition of the reflector.

A control of the division of the reflector surface (6) requires the construction of micro-structures (3) from a tessellation (5) on the smooth surface of the reflector S and, subsequently, grow or placing three-dimensional micro-structures on each division the reflector surface. Due to geometrical issues, these micro-structures need to be complex surfaces with variable curvature, or micro-structures comprise of multiple faces. It is important to note that in some trivial case, a high degree of symmetry of the micro-structure and distribution, as shown in Figure 1, it is possible to approximate any similar solutions with currently existing methods. However, the results are different from a geometric and technical point.

Because of the above, the invention presents reflectors with the peculiarity of having a structure that respects a particular tessellated, that is, a specific surface division. Control of tessellation (6) is established by a transformation of a particular mosaic (5), regularly or irregularly, defined in a plane, as those shown in Figure 8, on the reflector surface.

The Figure 11 presents the process by which a particular tile (5) defined in a plane corresponding to Figure 8c is transformed according to the spiral parameterization (41) described above (figure 3a), providing a complex division of the reflector surface (6).

Similarly, in Figure 12, the transformation of the same regular tile (5) corresponding to Figure 8c under the root parameterization described above (42) is illustrated. In Figure 15 the three-dimensionally result of the tessellation (6) is shown. Also in Figure 14 the same tile under regular parameterization (40) corresponding to Figure 2a is shown.

Furthermore, in Figures 16 and 17 irregular divisions (6) from non-periodic mosaics presented in Figures 9a that reduce considerably the correlation between facets and provides a uniform light pattern are shown.

### 3. FREE OF EDGE MICRO-STRUCTURED SURFACE.

As it was said in the section on the state of the art, the edges (7) are likely to generate multiple reflections (80), and reflections on the edges (81), causing rays with unwanted directions and optical losses.

In Figure 20a a typical faceted structure is represented where, to the left of the figure, a multiple reflection is shown (80) as a result of the interaction of the light in the region of the surface next to the edge of union between facets (7), and on the right, a uncontrolled dispersion (81) of light interact in the own edge.

In Figure 20b a structure with the same maximum inclination that structure corresponding to the Figure 20a is shown, but free of edges (71). In this case, for geometric reasons, there are no multiple reflections, or uncontrolled diffusion. In addition, the degree of controlled light scattering is more effective than the corresponding to Figure 20a.

Therefore, in the present invention complex surface free of edges is proposed, with soft joints between adjacent micro-structures, such as those shown in Figures 21b, 21c, 22, 26, 30 and 32. Thus, it is possible to reduce the occurrence of multiple reflections with good effectiveness in the controlled dispersion of the reflected light (Figure 20b).

The concept is simple but it is not possible to implement it adequately by the current CAD tools. The complexity of the design compared to existing reflectors is substantially higher. Then a construction method that enables this improvement is described.

### 4. LOCAL REGULATION OF THE FORM AND ORIENTATION OF THE MICRO-STRUCTURES.

Given the complexity of design with the current methods, generally, the reflectors existing have curved micro-structures with constant curvatures (as spheres or cylinders), that are similar each other under a scaling, a rotation and a displacement. This type of solutions is sufficient for most of the applications, which need a lighting with axial symmetry. Nevertheless, this type of regulation is poor, limiting the design and production of more complex patterns without axial symmetry.

In the present invention micro-structured reflectors are presented, that allow the control of the light to provide not axial pattern based on an individual regulation of the form and orientation of each micro-structure by means of deformations, rotations and translations between neighboring micro-structures, for complex surfaces with at least a principal curvature variable (Figure 23c), or for surfaces with at least one of his faces exposed to the light essentially flat (Figure 24), so that it directs the light reflected in the micro-structures according to the wished direction and the technical specifications.

In the Figure 24 the local control of a micro-structure is described, without limitative character, by its principal face flat and in flake configuration. By means of the orientation of the micro-structure, the direction of the rays (9) are locally regulated according the wished direction. In the Figure 23c a local regulation of micro-structures is illustrated schematically with principal curvature variable in two dimensions, since a visual representation in three dimensions is difficult to interpret visually.

This regulation is own of the absolute position of each micro-structure in the surface of the reflector, for what it is a function of both variables (u, v) that parametrize the points of micro-structure and it can be optimized by means of numerical computation.

On the other hand, this regulation is referred to those changes of the form, orientation and position of each micro-structure to regulate locally the direction of the reflected light, and is independent from the natural deformations that the own microstructure suffers due to the tesellation and/or the particular parameterization of the reflector.

Those pseudo-regulations of curved facets that can be realized by an operation of scaling and cutting of a elementary surface are excluded, as it is illustrated in the Figure 23b, since there is no real deformation neither real change of the form of the base figure that constitutes the facet and, in addition, it does not allow a suitable control of the light.

Next the different micro-structures with application in the regulation of the form and orientation for a extended control of the reflected light are emphasize, according to object of the invention.

FLAT: It is especially interesting a regulation of facets in which someone of its faces exposed to the radiation of the light source is flat, so that they could direct the light beam in the wished direction by means of this flat face. This type of micro-structures accurate necessarily, for geometric questions, to have more than one face to take to effect the local described regulation.

FLAKES: As example, and with not limitation, an arrangement particularly useful based in the above description, inspired by nature, it is to have the micro-structures that they form a flake structure (32) as in Figure 25a. This kind of structures allows, through a change that does not alter the superficial division of the reflector,
orient the flat surfaces of the micro-structures to properly direct the light as illustrated in Figure 24, and according to the corresponding tessellation of the Figure 18, so which allows to obtain complex patterns without axial symmetry. In addition, this configuration is effective in preventing light interactions with surfaces capable of generating multiple reflections and unwanted scattering by interaction with edges.

POLYGONAL: There are situations of interest where the micro-structure is formed by polygonal surfaces (31), as illustrated in Figure 25b. Furthermore, the possibility of have, for example, two faces exposed to the light from the light source of a pyramid, makes possible that the reflected light from the facet is directed in two particular directions, which it allows to obtain, for example, patterns of light with two luminous differentiated regions.

SURFACES WITH VARIABLE CURVATURE: In those cases in which one wants to smooth the distribution and/or to simplify the manufacture and to reduce costs of industrialization it is suitable to use complex micro-structures with curved surfaces instead of flat faces. A regulation of the form of the micro-structure under deformations with a particular tessellation necessary requires surfaces with a principal curvature variable (33), since in the Figure 23c.

This type of surfaces also allows a regulation for reflectors that do not have edges of union between neighboring micro-structures. As example, in the Figure 26 an internal surface (2) of a reflector appears that provides a luminous pattern displaced of the axial axis, where the micro-structures of the right part have a few optical characteristics and geometric different from the microstructures of the left part.

CONES: An application of industrial interest based on a local regulation of the micro-structures with one principal curvatures variable, as is described previously, is to implement micro-structures with surfaces corresponding to cones (34) or ruled surfaces (35). These surfaces have the optical and geometric special aptitude to spread the light from a direction determined in a plane, for what, suitably setted, the surfaces can radiate light in the same plane, approximately, for what they provide a luminous band in the shape of line or an oval. In the Figure 27 these three cases are showed. The Figure 27a and Figure 27b are formed by conical surfaces with circular and elliptical base, respectively, whereas in the Figure 27c the surfaces of the micro-structures are ruled surfaces. These micro-structures can include or not the own vertex of the cone, or of other ruled surfaces, depending on the orientation on these respect of the plane to removing, on its density and on the position of the light source.

CHESSBOARD REGULATION: On the other hand, it is a possible to sophisticate the regulation between neighboring micro-structures: consider a regular division of the reflector in micro-squares according to the Figure 1, for example. Imagine it is a chessboard with white regions and black regions. There may be specific regulations for micro-structures that are found in the black regions, for example, orientating the beams in a particular direction, and another independent regulation for the micro-structures that are located in the white region, for example, directing the light principally to another direction. This kind of regulation is especially useful to avoid multiple reflections between adjacent facets. In this solution can be considered that the micro-structure includes four regions, two white and two black, and suffers a regulation determined with its adjacent micro-structures.

### 5. METHOD OF CONSTRUCTION OF COMPLEX SURFACES BY MEANS OF GROWTH

A method for building optical systems with complex surfaces comprising the technical innovations object of the present invention is described, that allows an adequate control of the parameterization and tessellation, as well as a local regulation of each micro-structure.

The procedure departs from a parameterization (distribution) and a superficial division of the reflector (tessellation) and, later, the micro-structures are grown on position accordingly with it. The current methods proceed from opposite form: they depart from a plurality of basic surfaces that intersects each other to form a superficial division of the reflector, which is determined a *posteriori.*

Given a generatrix curved, the smooth surface ***S*** of the reflector is defined by rotation of this curve on its axial axis *z*. Whether a particular parameterization of the above mentioned surface ***S*,** for example, a spiral parameterization (41) as described previously and characterized by the parameters *u* and *v*. Of this form, a point ***rₒ*** of the smooth surface ***S*** is defined by its position ***r**ₒ* = ***r**ₒ* (*u*, *v*) ∈ ***S***. On the other hand, ***w*** = ***w** (u, v*) is the set of vectors not coplanar with the tangent plane of the smooth surface ***S*** in the point ***rₒ*** (*u, v*) in the manner that their do not intersect each other. Generally, **w** *(u, v*) represent a set of vector perpendicular to the ***S*** surface on the point *rₒ*, although it may be defined other criteria to other directions, primarily to avoid manufacturing problems with exit angles for certain manufacturing technologies. These parameters are presented in Figure 28.

Under these definitions, the complex surface of the reflector ***S**** is determined by the set of point ***r*** = ***r** (u, v)* such that ***r*** = ***r**ₒ* + *f **w*** ∈ ***S**,** being *f* = *f (u, v)* a function that defines the micro-structures of the reflector, which are constructed or grown in the direction ***w*** according the quantity *f*.

The previous definition describes a growth of the micro-structures on the surface of the reflector along a straightly vector ***w*.** This definition can be generalized to micro-structures that grow along a few lines of a vectorial field, these do not have to be necessarily straight, as one illustrates in the Figure 29. Of this form, **w** (f) can be referred to the line of a vectorial field, parametrized by the value *f* = *f (u, v*), that pass across the point *(u, v)* of the smooth surface ***S*** when *f* = *0.* So, the set of points ***r*** of the complex surface of the reflector ***S**** can be described as those points that result when every point ***r**ₒ* of the surface ***S*** is displaced a distance *f* along the line of field ***w*** that intersecting the smooth surface ***S*** in the point ***rₒ*.**

Alternatively, the points ***r*** according to the previous definition also can represent points of interpolation of the own surface or the points of control associated with a paramaterizable surface, like, without limitative character, Bézier, Splines, B-Splines or Nurbs surfaces, the three last ones with its corresponding vectors *knots,* or any point of own control for another representation of surfaces derived from these. That simplifies significantly the process of design and optimization by existing numerical algorithms.

### DESCRIPTION OF A PARTICULAR EMBODIMENT:

Since the technical improvements described that are object of the present invention relate to the existing solutions are several, there are many possible embodiments that result from combinations of the mentioned improvements. Therefore, there are a large number of individual achievements that may be preferred according to desired specifications.

Without limitative character, in the Figure 32 a reflector with a root distribution is shown (42) according to the Figure 4c, where micro-structures (3) are free of edges (71).

To facilitate the interpretation of the structure of the reflector, in the Figure 32a the external face of the same appears, though, the optically active face is the inner face, which shares the same superficial structure that the showed face.

## Claims

1. **:** Optical system for lighting applications that contains a light source and a reflector (1) with an inner surface (2) essentially of revolution constituted by a plurality of micro-structures (3) **characterized by** being arranged according to a spiral (41), root (42), inverse root (43) or hyperbolic (44) parameterization, which prevents alignments between micro-structures and preferred surface orientations.

2. **:** Optical system for lighting applications that contains a light source and a reflector (1) with an inner surface (2) essentially of revolution constituted by a plurality of micro-structures (3) **characterized** because the tessellation (6), that is, the division of the internal surface of the reflector, is performed according to a transformation of the mosaic (5) defined on a plane over the internal surface of the reflector.

3. **:** Optical system for lighting applications that contains a light source and a reflector (1) with an inner surface (2) essentially of revolution constituted by a plurality of micro-structures (3) **characterized** because the joints between adjacent micro-structures have not edges (7), that is, the reflector surface is free from abrupt changes in orientation at the junction between neighboring micro-structures, it has soft joints (71).

4. **:** Optical system for lighting applications that contains a light source and a reflector (1) with an inner surface (2) essentially of revolution **characterized by** being combination of any of the preceding claims.

5. **:** Optical system for lighting applications that contains a light source and a reflector (1) with an inner surface (2) essentially of revolution constituted by a plurality of micro-structures (3) **characterized in that**: i) at least one of the surfaces of the micro-structures exposed to the light from the source is essentially flat, ii) the micro-structures have a local regulation of its shape and/or orientation by deformations, translations and/or rotations between adjacent micro-structures for the light control, and iii) the luminous beam projected by the system presents a pattern without axial symmetry respect to the axis of the reflector.

6. **:** Optical system for lighting applications that contains a light source and a reflector (1) with an inner surface (2) essentially of revolution constituted by a plurality of micro-structures (3) according to the fifth claim, **characterized by** the micro-structures are polygonal surfaces (31) or flakes (32).

7. : Optical system for lighting applications that contains a light source and a reflector (1) with an inner surface (2) essentially of revolution constituted by a plurality of micro-structures (3) **characterized in that**: i) some of the surfaces of the micro-structures have one of their main curvature variable (33), ii) the micro-structures have a local regulation of their shape by deformation between adjacent micro-structures for the light control, excluding those transformations that can be implemented with a scaling and cutting operation of the micro-**structure**, and iii) **the** light beam projected by the system presents a pattern without axial symmetry about the axis of the reflector.

8. **:** Optical system for lighting applications that contains a light source and a reflector (1) with an inner surface (2) essentially of revolution constituted by a plurality of micro-structures (3) according to the seventh claim, **characterized in that** i) the surfaces that make up the micro-structures are essentially cone (34), or ruled surfaces (35), and ii) the projected light is an oval or linear light distribution.

9. **:** Optical system for lighting applications that contains a light source and a reflector (1) with an inner surface (2) essentially of revolution **characterized by** combination of the first, second and fifth claims, or combination of the first, second and sixth claims, or combination of the fourth and seventh claims, or combination of the fourth and eighth claims.

10. **:** Method for the construction of a reflector **(1)** with a complex internal surface S* that is based on a smooth surface of revolution S defined by the corresponding generatrix curve **characterized by** the set of points **r** of the complex surface ***S**** results when each point ***r**ₒ* of the smooth surface ***S*** is displaced with respect to a vector **w** which is not coplanar with the tangent plane to the surface ***S*** at that point ***r*ₒ,** usually the normal vector, a distance *f* given by a two-dimensional function *f* = *f (u, v),* that is, ***r*** = ***rₒ*** + *f* ***w*,** or, alternatively, the set of points ***r*** of the complex surface ***S**** that results when each point ***rₒ*** is displaced a distance *f* = *f (u, v)* along the line of a vector field that intersects the smooth surface ***S*** in that point ***rₒ*.**

## Amended claims

### Amended claims under Art. 19.1 PCT

**1.** Optical system for lighting applications that contains a light source and a reflector(1) with an inner surface (2) essentially of revolution constituted by a plurality of micro-structures (3) **characterized by** being arranged according to a root (42), inverse root (43) or hyperbolic (44) parameterization, which prevents alignments between micro-structures and preferred surface orientations.

**2.** Optical system for lighting applications that contains a light source and a reflector (1) with an inner surface (2) essentially of revolution constituted by a plurality of micro-structures (3) **characterized** because i) the micro-structures are composed by surfaces with main curvatures variable, and ii) the tessellated (6), that is, the division of the inner surface of the reflector that delimit the micro-structures cover partially or totally the edges (7) to the light source and reduces interaction of light with the edges.

**3.** Optical system for applications in lighting that contains a light source and a reflector (1) with an inner surface (2) of revolution essentially constituted by a plurality of micro-structures (3) **characterized** because i) micro-structures are composed by surfaces with their two main curvature variables, ii) joints between adjacent micro-structures have not edges (71), and iii) the micro-structures have local surface orientations defined by the height and distance of neighboring micro-structures, that prevent or reduce that the light from source of light and reflected on the first time in the reflector impacts a second time (80) with some of its adjacent micro-structures.

**4.** Optical system for lighting applications that contains a light source and a reflector (1) with an inner surface (2) essentially of revolution **characterized by** combination of any of the preceding claims.

**5.** Optical system for lighting applications that contains a light source and a reflector (1) with an inner surface (2) essentially of revolution constituted by a plurality of micro-structures (3) **characterized in that**: i) the micro-structures are composed by several faces, ii) at least one of the surfaces of micro-structures exposed to the light from the source is essentially flat, iii) the face or faces essentially flat exposed to the light from the source present a local regulation of its orientation, which depends exclusively of its absolute position in the internal generatrix surface of the reflector, on the direction of the incident light and on the selected direction of the reflected light, and iv) the luminous beam projected by the system presents a pattern without axial symmetry respect to the axis of the reflector.

**6.** Optical system for lighting applications that contains a light source and a reflector (1) with an inner surface (2) of revolution essentially constituted by a plurality of micro-structures (3) according to the fifth claim, **characterized by** each micro-structure is formed by polygonal surfaces (31) or that each micro-structure is a flake (32).

**7.** Optical system for lighting applications that contains a light source and a reflector(1) with an inner surface (2) essentially of revolution constituted by a plurality of micro-structures (3) **characterized in that**: i) some of the surfaces of the micro-structures have one of their main curvatures variable (33), ii) the micro-structures have a local regulation of their shape by deformations between adjacent micro-structures for the light control, excluding those transformations that can be implemented with a scaling operation and cutting of the micro-structure, and iii) the light beam projected by the system presents a pattern without axial symmetry respect to the axis of the reflector.

**8.** Optical system for lighting applications that contains a light source and a reflector (1) with an inner surface (2) essentially of revolution constituted by a plurality of micro-structures (3) according to the seventh claim, **characterized in that** i) the surfaces that make up the micro-structures are essentially cone (34), or ruled surfaces (35), and ii) the projected light is a linear or oval light distribution.

**9.** Optical system for lighting applications that contains a light source and a reflector(1) with an inner surface (2) essentially of revolution **characterized by** the combination of the first, second and fifth claims, or, combination of the first, second and sixth claims, or combination of the fourth and seventh claims, or combination of the fourth and eighth claims.

**10.** Method for the construction of a reflector (1) with a complex internal surface ***S**** that is based on a smooth a surface of revolution ***S*** defined by the corresponding generatrix curve **characterized by** the set of points ***r*** of the complex surface ***S**** that results when each point rₒ of the smooth surface ***S*** is displaced with respect to a vector ***w*** which is not coplanar with the tangent plane to the surface ***S*** at that point ***r**ₒ*, usually the normal vector, a distance *f* given by a two-dimensional function *f = f (u, v),* that is, ***r = rₒ* +** *f****w*,** or, alternatively, the set of points ***r*** of the complex surface ***S**** result to displace each point ***r***ₒ is displaced a distance *f = f (u, v)* along the line of a vector field that intersects the smooth surface ***S*** in that point ***r***ₒ.
